# EUROPÄISCHE PATENTSCHRIFT

(11) **EP 2 079 636 B1**
(45) Veröffentlichungstag und Bekanntmachung des Hinweises auf die Patenterteilung: **12.05.2010**
(21) Anmeldenummer: 07822243.7
(22) Anmeldetag: 06.11.2007
(51) Int. Cl.: B64D 11/06

(54) **BESTUHLUNG EINER FAHRZEUGKABINE**
SEATING ARRANGEMENT OF A VEHICLE COMPARTMENT
AGENCEMENT DE SIÈGES D'UNE CABINE DE VÉHICULE

(30) Priorität: 06.11.2006 DE 102006052536
(43) Veröffentlichungstag der Anmeldung: 22.07.2009
(73) Patentinhaber: Poggenpohl Möbelwerke Gmbh, 32051 Herford (DE)
(72) Erfinder: FUNKE, Thomas, 32052 Herford (DE); JUNKER, Manfred, 32257 Bünde (DE)
(74) Vertreter: Habenicht, Wieland
(86) Internationale Anmeldenummer: PCT/EP2007/061919
(87) Internationale Veröffentlichungsnummer: WO 2008/055892

(56) Entgegenhaltungen:
- EP-A- 0 850 834
- DE-A1- 10 032 996
- FR-A- 2 882 006
- GB-A- 2 362 095
- US-A- 3 394 964
- US-B1- 6 302 483

## Beschreibung

Diese Erfindung betrifft die Bestuhlung einer Fahrzeugkabine und insbesondere einer Flugzeugkabine nach dem Oberbegriff von Anspruch 1.

Da im Flugverkehr immer größere Reichweiten erreicht werden und die Flüge immer länger dauern, ohne dass ein Zwischenstopp eingelegt wird, gewinnt das Angebot an Komfort auf diesen Reisen an Bedeutung. Insbesondere steigt dabei die Nachfrage nach einer Bestuhlung einer hochwertigen Klasse, die es ermöglicht, den Passagieren auch gehobene Gastronomie am Sitzplatz zu bieten. Diesen Anforderungen wird die bisher bekannte Bestuhlung der Kabinen nicht gerecht. So ist man in den heutigen Flugzeugausstattungen in seiner Bewegungsfreiheit und vor allem in der Armfreiheit eingeschränkt, da die Sitze aus Kapazitätsgründen relativ eng neben- und hintereinander angeordnet sind.

Aus EP 0 850 834 ist ein vollständig verstellbarer Liegesitz bekannt, der von einer Tagesposition in eine Nachtposition überführt und/oder gedreht werden kann. In der Nachtposition kann der Sitz ganz in den ungenutzten Gang ausgefahren werden. In der vollständig ausgefahrenen Position kann die Rückenlehne in eine horizontale Lage gebracht werden und die Beinauflage vollständig ausgefahren werden, um den Passagieren einen ruhigeren Schlaf in horizontaler Stellung zu ermöglichen.

In der US2005/087650 wird eine Kabinensitzanordnung beschrieben, die Vorder- und Rücksitze hat und für Flugzeuge gedacht ist. Dabei können Rückenlehne und Sitzkissen geklappt und innerhalb eines Rahmens bewegt werden, so dass sie zusammen mit gegenüberliegenden Kissen eine flache Schlafstätte für Passagiere bildern.

In EP 0 825 108 wird ein Sitzsystem für Flugzeugpassagiere beschrieben, bei dem eine Sitzgruppe ein Gestell zur Verankerung im Boden aufweist sowie Armlehnenelemente und Rückenlehnen und Sitzpolster, die gegenüber dem Gestell beweglich sind, so dass vier Sitzpositionen und eine eingeklappte Position mit drei Sitzpositionen einstellbar sind.

Aus EP 1 211 176 ist eine Passagierkabine bekannt, bei der die Passagiersitze an der Außenwand als Einzelsitze ausgebildet sind, die während der Start- und Landephase in einer im wesentlichen in Flugzeuglängsrichtung nach vorne ausgerichtet sowie während der Flugphase in eine in Richtung der Kabinenmittelachse nach innen gedrehte Lage angeordnet werden können.

Insbesondere im Gastronomiebereich eines Flugzeugs ist die bisherige Unterbringung und Versorgung der Passagiere bisher in sehr engen Grenzen vorgegeben, es bleibt nämlich während des Fluges die Ausrichtung der Sitze für die Passagiere in eine Richtung fest vorgegeben. Eine Unterhaltung mit Sitznachbarn ist nur sehr eingeschränkt möglich, und damit wird auch kein Ambiente zugelassen, in dem sich Passagiere wohlfühlen.

Es ist die Aufgabe der vorliegenden Erfindung, eine Bestuhlung für eine hochklassige Fahrzeugkabine anzugeben, die die genannten Nachteile beim Stand der Technik überwindet und eine flexible und großzügige Aufteilung der Sitze in der Kabine für die reine Reisezeit und ein angenehmes Ambiente für gemeinsames Speisen ermöglicht.

Diese Aufgabe wird gelöst durch die Bestuhlung nach Anspruch 1. Bevorzugte Ausführungsformen der Erfindung sind Gegenstand der Unteransprüche.

Der der Erfindung zugrunde liegende Lösungsgedanke besteht darin, die Einzelsitze mit einem gewissen Abstand zueinander anzuordnen, wobei dieser Abstand insbesondere etwa einer Sitzbreite entspricht. Außerdem wird eine einklappbare Tischvorrichtung vor jeweils zwei benachbarten Sitzen angeordnet, die im ausgeklappten Zustand wenigstens für zwei Sitze Abstellmöglichkeiten bietet. In besonders bevorzugten Ausführungsformen der Erfindung sind die Sitze und die Tischvorrichtungen jeweils um eine Vertikalachse drehbar, und es können Sitzgruppen mit zwei oder vier Einzelsitzen und einem gemeinsamen Tisch gebildet werden.

Die erfindungsgemäße Bestuhlung einer Fahrzeugkabine und insbesondere einer Flugzeugkabine, die einen Kabinenboden mit einer darunter liegenden Trägerstruktur umfasst, mit:
wenigstens zwei Sitzen für Passagiere, die durch einen Zwischenraum voneinander getrennt sind, und
jeweils einer Tischeinrichtung vor jedem der Sitze, die eine ausklappbare Tischplatte umfasst,
wobei jeder Sitz umfasst:
- ein Sitzgestell, das auf der Trägerstruktur unter dem Kabinenboden der Flugzeugkabine befestigt ist,
- ein Sitzkissen, das auf dem Sitzgestell befestigt ist,
- eine Rückenlehne, die an dem Sitzgestell befestigt ist,
   ist dadurch gekennzeichnet, dass
   die Tischeinrichtung einen Tischsockel umfasst, der auf der Trägerstruktur unter dem Kabinenboden befestigt ist und so angeordnet ist, dass er im wesentlichen einen gleichen Abstand von jeweils zwei Sitzen einer Sitzgruppe aufweist.

In bevorzugter Ausführungsform weist die erfindungsgemäße Bestuhlung als einziges - oder soweit technisch möglich und sinnvoll - als kombinierte Merkmale auf, dass:
das Sitzgestell jedes Sitzes um eine insbesondere zentrale vertikale Achse drehbar ist, so dass der Sitz insbesondere um 90° oder 180° drehbar ist;
der Sitz oder die wenigstens zwei Sitze einer Sitzgruppe seitlich und/oder nach vorne bzw. hinten verschiebbar ist bzw. sind;
der Tischsockel um eine insbesondere zentrale vertikale Achse drehbar ist;
der Tischsockel seitlich und/oder nach vorne bzw. hinten verschiebbar ist;
der Tischsockel gegenüber den wenigstens zwei Sitzen einer Sitzgruppe nach vorne versetzt ist, so dass der seitliche Abstand der beiden Sitze voneinander im wesentlichen anderthalb Mal so groß ist wie der Abstand des Tischsockels von einem der Sitze;
eine Sitzgruppe vier Sitze umfasst, die durch einen ersten Zwischenraum seitlich und einen zweiten Zwischenraum in Blickrichtung voneinander getrennt sind, und der Tischsockel symmetrisch zwischen den vier Sitzen angeordnet ist, so dass sein Abstand zu jedem der Sitze im wesentlichen gleich groß ist;
der Tischsockel auf zwei gegenüberliegenden Seiten jeweils eine Tischplatte umfasst;
die Tischplatte mehrere Plattensegmente umfasst, die jeweils gelenkig miteinander verbunden sind;
der Abstand zwischen zwei Sitzen im wesentlichen einer Sitzbreite entspricht.

Einer unter mehreren Vorteilen der erfindungsgemäßen Bestuhlung besteht darin, dass Reisegruppen von bis zu vier Personen zusammen reisen und zusammen speisen können. Es können aber auch zwei oder drei Personen zu einer Gruppe zusammengefasst werden, und die Zusammensetzung einer Reisegruppe kann sich im Verlauf der Reise verändern, wozu nur ein oder mehrere Sitze zu entsprechenden Tischen hin gedreht werden müssen.

Weitere Vorteile und Merkmale der Erfindung ergeben sich aus der folgenden Beschreibung von bevorzugten Ausführungsbeispielen, bei der Bezug genommen wird auf die beigefügte Zeichnung.

Fig. 1 zeigt eine Sitzanordnung nach dem Stand der Technik in Seitenansicht.

Fig. 2A bis 2D zeigen eine erfindungsgemäße Tischeinrichtung in eingeklappter bzw. ausgeklappter Position mit einer bzw. zwei Tischplatten in Seitenansicht und in perspektivischer Darstellung.

Fig. 3 zeigt einen erfindungsgemäßen Drehsitz in perspektivischer Darstellung.

Fig. 4A bis 4D zeigen die erfindungsgemäße Bestuhlung der Fahrzeugkabine in unterschiedlichen Konfigurationen.

Die Zeichnung ist nicht maßstabsgetreu. Gleiche oder gleich wirkende Elemente sind mit denselben Bezugszeichen bezeichnet. Unter Bestuhlung ist in dieser Anmeldung die gesamte Inneneinrichtung einer Fahrzeugkabine für Passagiere zu verstehen, d.h. die Sitze und die Tische sowie die jeweils dazugehörigen Komponenten und Einrichtungen. Wesentlicher Aspekt der folgenden Beschreibung ist dabei die Anordnung der einzelnen Sitze in der Kabine.

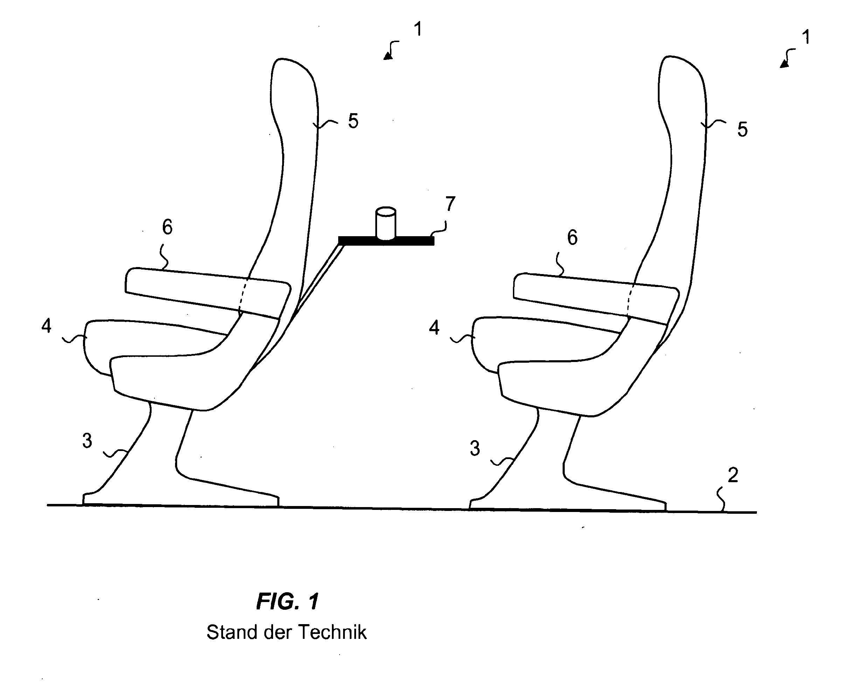

In Fig. 1 ist in Seitenansicht eine typische Anordnung von Sitzen für Passagiere in einem Flugzeug gezeigt, von denen zwei Sitze 1 dargestellt sind. Die Sitze 1 sind auf dem Boden 2 der Kabine verankert, so dass sie nicht verrutschen können, insbesondere nicht bei hohen Beschleunigungen des Fahrzeugs wie Start und Landung eines Flugzeugs. Die Sitze 1 umfassen jeweils ein Sitzgestell 3, das am Boden 2 fixiert ist, sowie ein Sitzkissen 4 mit Rückenlehne 5 und Armlehne 6, wobei beide Lehnen entweder direkt oder mittelbar an dem Gestell 3 befestigt sind. Dabei sind die Sitze in der Regel nicht am Boden 2 selbst, sondern an einer unter dem Kabinenboden 2 liegenden Trägerstruktur befestigt.

Es sind mehrere Sitze 1 zu (nicht gezeigten) Reihen zusammengefasst, und mehrere Reihen sind hintereinander angeordnet. Während die Sitze einer gleichen Reihe direkt nebeneinander angeordnet sein können, haben die Reihen einen Abstand voneinander, der ein bequemes Ein- und Aussteigen von Passgieren auf Sitzplätzen abseits des (nicht dargestellten) Gangs ermöglicht. Darüber hinaus wird es durch den ausreichenden Abstand zwischen den Reihen möglich, einen kleinen Klapptisch 7 vorzusehen, auf dem Speisen serviert werden können oder der als Ablage für persönliche Gegenstände des Passagiers dient, wie es in Fig. 1 beispielsweise durch ein Trinkgefäß angedeutet wird. Dieser Klapptisch 7 ist bei heutigen Flugpassagiersitzen eine Tischplatte, die über ein Gestell an dem Vordersitz des jeweiligen Passagiers befestigt ist. Im Bedarfsfall wird der Klapptisch 7 ausgeklappt, wenn er nicht mehr benötigt wird, kann er wieder im Rückenteil des Vordersitzes verstaut werden.

In einer "Premium-Klasse" der kommenden Generation für Flugpassagiere haben die Sitze mehr Platz, so dass auch ein gewisser, als angenehm empfundener Abstand zwischen den einzelnen Sitznachbarn gewährt werden kann. Aber auch zu dem jeweiligen Vordersitz soll der Abstand vergrößert werden, so dass das Ein- und Aussteigen in und aus dem Sitz ohne Mühe bewältigt werden kann und ohne Inanspruchnahme der Sitznachbarn möglich ist. Der größere Abstand zu dem Vordersitz macht es jedoch unpraktisch, einen Klapptisch der bekannten Art in den Vordersitz zu integrieren, da dieser mit überproportional ausladenden Armen versehen werden müsste und damit schwer zu handhaben wäre.

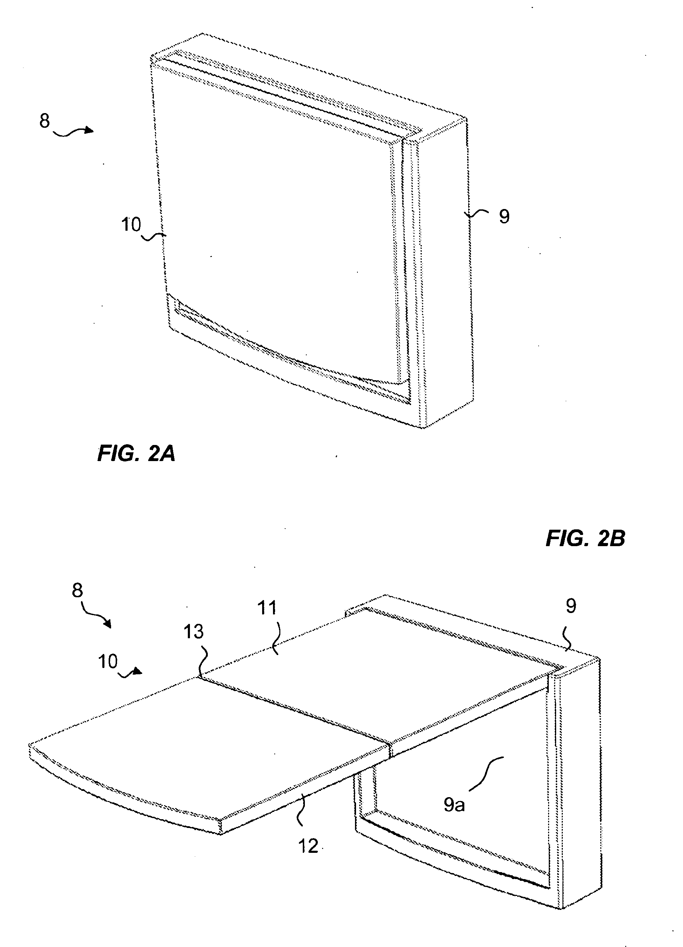

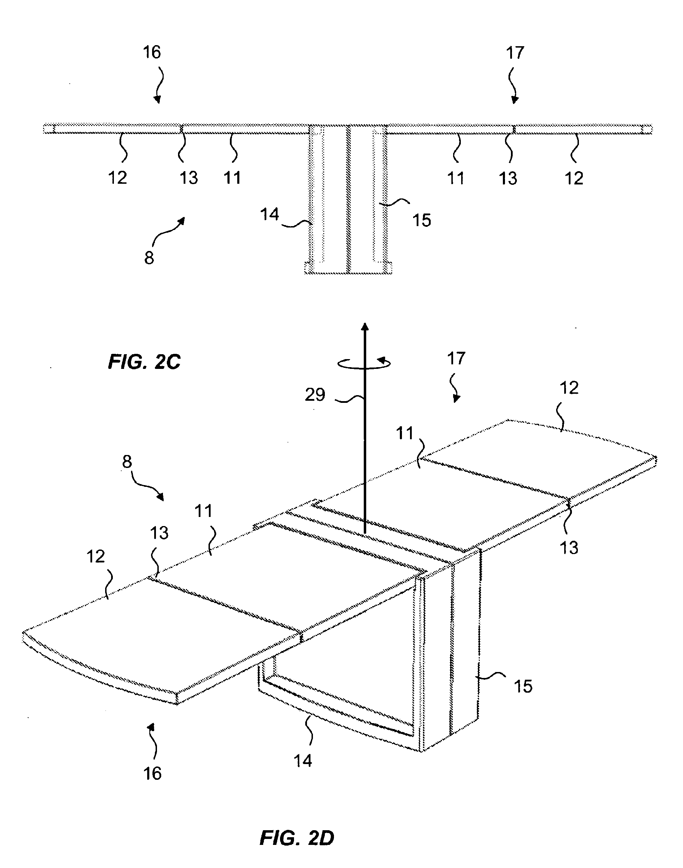

Erfindungsgemäß wird daher ein autonomer Tisch vorgeschlagen, der unabhängig von einem Sitz frei in der Fahrgastzelle, insbesondere in der Flugpassagierkabine, angeordnet werden kann, soweit dies kompatibel mit der unter dem Kabinenboden 2 befindlichen Trägerstruktur ist. Eine erste Ausführungsform eines solchen Tischmoduls 8 ist in Fig. 2 gezeigt. In Fig. 2A ist diese erste Ausführungsform des Tischmoduls 8 perspektivisch in eingeklapptem Zustand dargestellt. Die Tischeinrichtung 8 umfasst einen Tischsockel 9 und eine ausklappbare Tischplatte 10. In dem gezeigten eingeklappten Zustand wird die Tischplatte 10 vollständig von dem Sockel 9 aufgenommen, so dass sie kein vorspringendes Element mehr aufweist und damit keinerlei Gefahr für vorbeigehende Personen darstellt. Im übrigen ist die Tischeinrichtung 8 in eingeklapptem Zustand optisch wenig auffällig und passt sich somit gut in die gesamte Einrichtung der Kabine ein.

In ausgeklapptem Zustand ist die Tischeinrichtung 8 in Fig. 2B gezeigt. Hier ist die Tischplatte 10 in die Horizontale gebracht, so dass sie als Ablagefläche für Speisen, Getränke oder auch Gegenstände beliebiger Art dienen kann. In der gezeigten Ausführungsform besteht die Tischplatte 10 aus zwei Segmenten, nämlich einem ersten Tischplattensegment 11 und einem zweiten Tischplattensegment 12, wobei das erste Tischplattensegment 11 unmittelbar an dem Sockel 9 der Tischeinrichtung 8 ansetzt. Das zweite Tischplattensegment 12 ist über ein Zwischengelenk 13 mit dem ersten Tischplattensegment 11 gelenkig verbunden. Damit erreicht man einerseits eine ausreichende Länge der Tischplatte 10, andererseits ist sichergestellt, dass die Tischplatte in eingeklapptem Zustand ganz von dem Sockel 9 aufgenommen werden kann. Dazu weist der Sockel 9 ein entsprechend tiefes Aufnahmefach 9a auf, in dem die Tischplatte 10 verstaut werden kann. Die Bestimmung der Tiefe des Faches 9a, die Verriegelung der Tischplatte gegen unbeabsichtigtes Öffnen und die Auslegung des Zwischengelenks 13 sind dem Fachmann auf diesem Gebiet wohl vertraut und werden daher hier nicht weiter erläutert.

Es versteht sich von selbst, dass gegebenenfalls nur ein Segment 11 ausgeklappt wird, während das andere Segment 12 eingeklappt, d.h. unter dem ersten Segment 11 verbleibt.

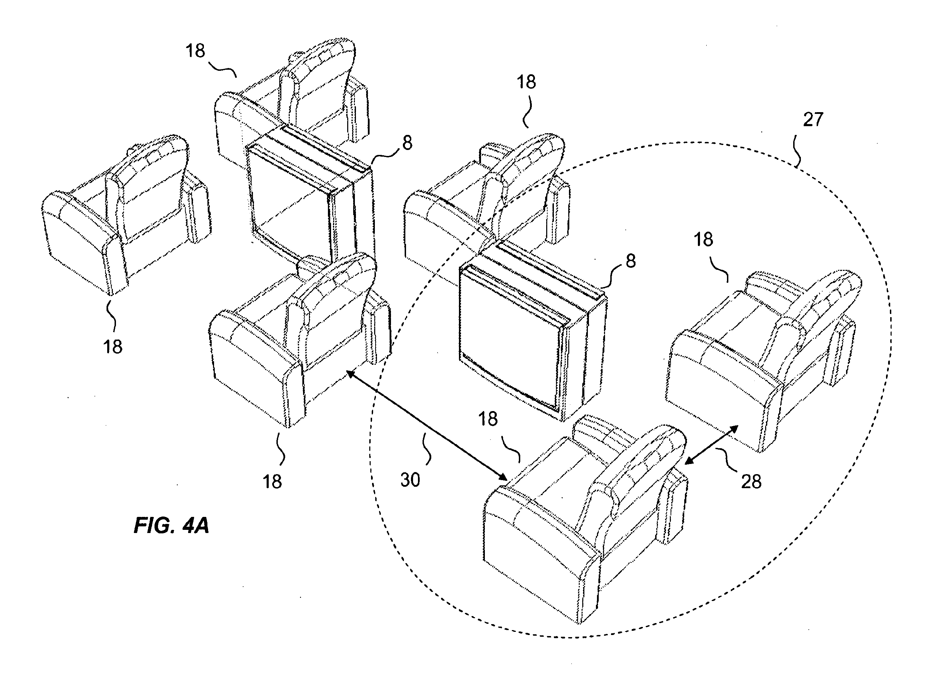

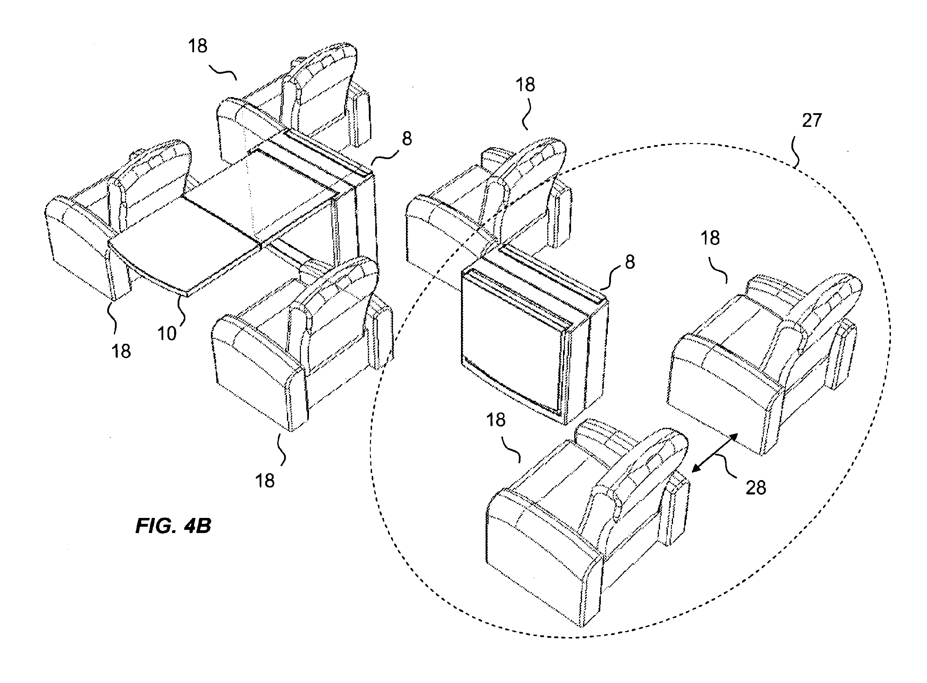

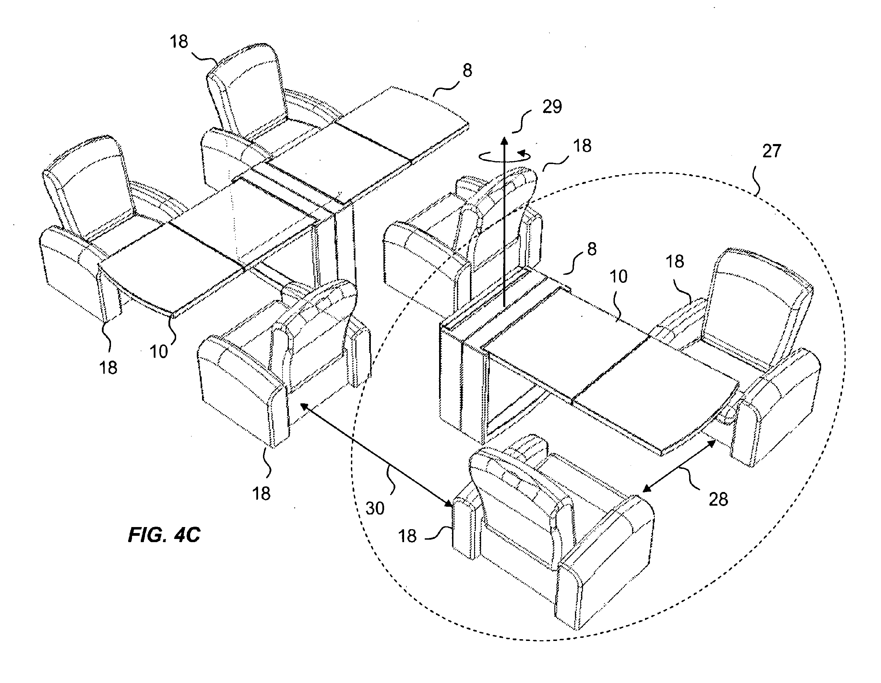

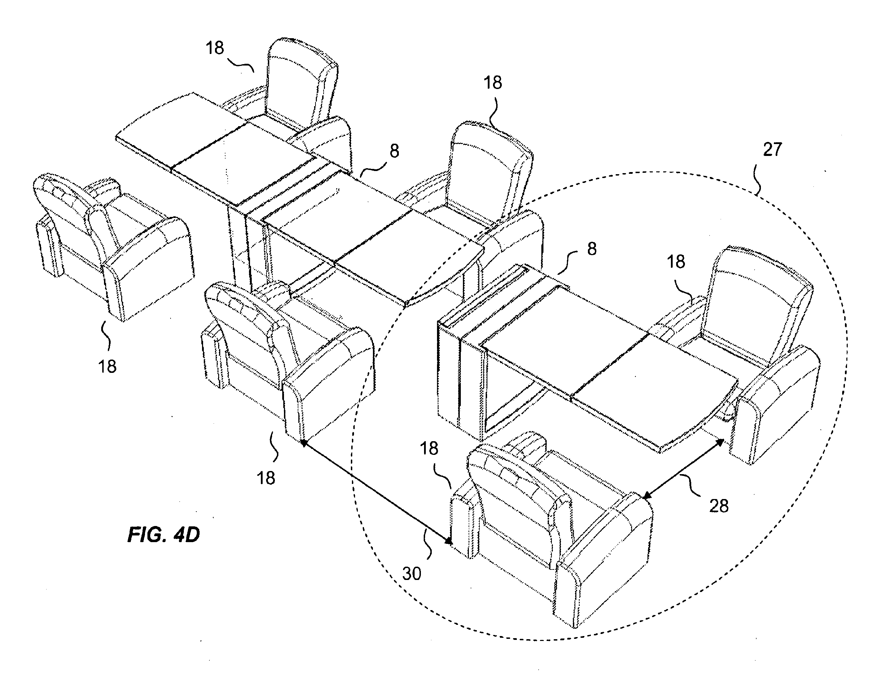

Während die Ausführungsform der Tischeinrichtung 8 nach Fig. 2A und 2B nur auf einer Seite eine Tischplatte aufweist, ist in Fig. 2C und 2D eine Ausführungsform des Tisches gezeigt, bei der der Tischsockel zweigeteilt ist und einen ersten Tischsockel 14 und einen zweiten Tischsockel 15 aufweist, die jeweils eine Tischplatte aufnehmen. Wie aus der Seitenansicht in Fig. 2C ersichtlich, umfasst bei dieser Ausführungsform die Tischeinrichtung 8 auf ihren beiden gegenüberliegenden Seiten jeweils eine Tischplatte 16 und 17. Die erste Tischplatte 16 ist an dem ersten Tischsockel 14 angebracht und umfasst analog zu der Ausführungsform nach Fig. 1A ein erstes Tischplattensegment 11 direkt an dem Sockel 14 und ein zweites Tischplattensegment 12 an dem ersten Tischplattensegment 11, wobei die Verbindung durch ein Zwischengelenk 13 hergestellt wird. In der gleichen Art und Weise ist die zweite Tischplatte 17 an dem zweiten Tischsockel 15 angebracht und umfasst ebenfalls ein erstes Tischplattensegment 11 direkt an dem Sockel 15 und ein zweites Tischplattensegment 12 an dem ersten Tischplattensegment 11, wobei die Verbindung durch ein Zwischengelenk 13 hergestellt wird. Zur besseren Veranschaulichung ist diese Ausführungsform perspektivisch nochmals in Fig. 2D gezeigt, ebenfalls in ausgeklapptem Zustand. In Fig. 2D ist darüber hinaus durch eine vertikale Achse 29 angedeutet, dass der Tisch um diese vertikale Achse 29 drehbar ist. Die Vorteile dieser Möglichkeit werden weiter unten in Zusammenhang mit Fig. 4 deutlich werden. Vorzugsweise verläuft die Achse 29 mittig, d.h. zentral durch die Tischeinrichtung 8, so dass es bei einer Drehung um diese Achse nicht automatisch auch zu einer (unerwünschten) Translation kommt und sich damit der Abstand des Tisches von den umgebenden Sitzen bei einer Drehung ändert.

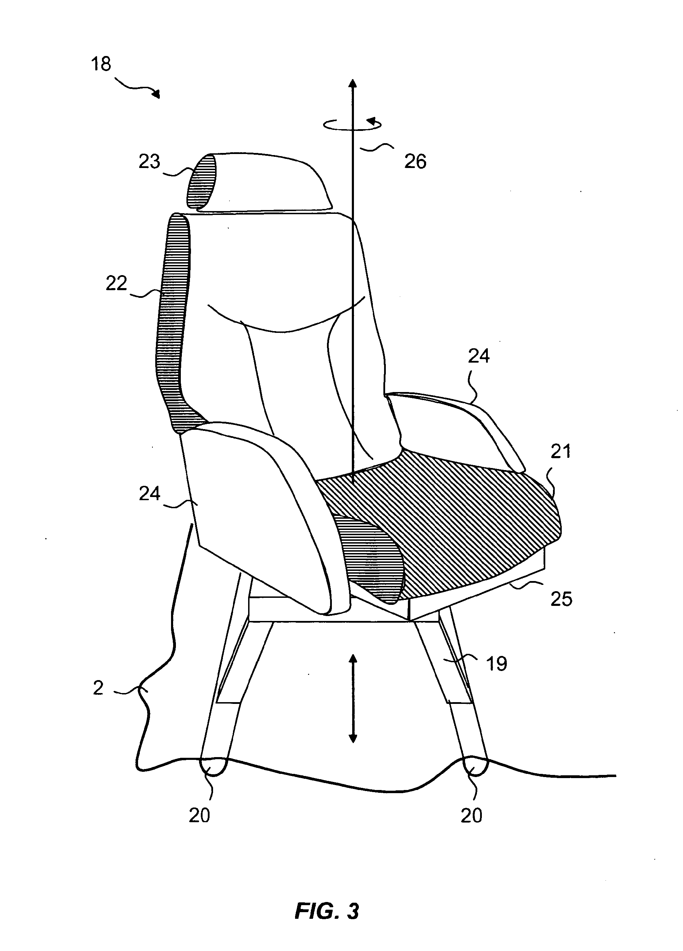

In Fig. 3 ist ein Drehsitz 18 für die erfindungsgemäße Bestuhlung einer Passagierkabine gezeigt. Der Drehsitz 18 weist eine Sitzverankerung 19 auf, mit der der Drehsitz 18 in Schienen 20 unterhalb des Bodens 2 der Kabine verschraubt ist. Dabei kann der Drehsitz 18 in den Schienen 20 nach vorne und hinten verschoben werden, wie es durch den Doppelpfeil angedeutet ist. Es ist außerdem möglich, den Sitz 18 in eine seitliche Richtung zu verschieben, wenn die Sitzverankerung 19 in sich eine (nicht gezeigte) entsprechende Verstellmöglichkeit aufweist. Der Drehsitz 18 umfasst im übrigen Komponenten, die analog zu denen des Sitzes nach dem Stand der Technik in Fig. 1 sind. Diese Komponenten sind eine Sitzfläche 21, eine Sitzrückenlehne 22, die mittelbar oder unmittelbar mit der Sitzfläche 21 verbunden ist, sowie eine Nachenstütze 23 am oberen Ende der Sitzrückenlehne 22. Darüber hinaus sind Seitenlehnen 24 vorgesehen, in denen insbesondere (nicht gezeigte) Steuerelemente für die Sitzeinstellung aber auch für die Wiedergabe von Unterhaltungsprogrammen integriert sein können.

Die eigentlichen Sitzkomponenten 21, 22, 23 und 24 sind auf einer Drehplatte 25 montiert, die drehbar auf der Sitzverankerung 19 befestigt ist. Der in Fig. 3 gezeigte Sitz 18 unterscheidet sich also von dem Sitz 1 in Fig. 1 dadurch, dass er - analog zu der Tischeinrichtung 8 - drehbar ist, so dass er insbesondere um 90° oder um 180° gedreht werden kann. Damit kann sich der Passgier seinem Sitznachbarn oder auch dem hinter ihm sitzenden Passagier zuwenden. Mit dem oben beschriebenen "gleitenden Karussell-Unterbau" 19, 25 kann zudem der Abstand zwischen den Sitzen verändert werden, und man erreicht somit beim Sitz 18 eine maximale Flexibilität bei den Verstellmöglichkeiten. Insbesondere ist dies von Vorteil bei den Sitzkonfigurationen, die im folgenden anhand der Fig. 4A bis 4D erläutert werden. Die vertikale Achse, um die der Sitz 18 gedreht werden kann, ist in Fig. 3 mit 26 bezeichnet. Diese Achse befindet sich vorzugsweise im Zentrum des Sitzes, so dass man bei einer Drehung um die Achse 26 nicht gleichzeitig eine Translation erfährt, bei der sich mit der Drehung der Abstand des sitzenden Passagiers zu seinem Sitznachbarn oder zu dem vor ihm befindlichen Tisch ändern würde.

Mit einem Tisch 8 nach Fig. 2 und einem Sitz 18 nach Fig. 3 lassen sich die im folgenden anhand von Fig. 4 erläuterten Sitz- und Tischkonfigurationen in einer "Premium-Klasse" für Passagiere bzw. im Passagierbetrieb der ersten Klasse oder der "Business Class" verwirklichen. Fig. 4A zeigt eine erste Konfiguration, in welcher alle Sitze 18 in der Kabine in ein und dieselbe Richtung orientiert sind. Dies ist insbesondere der Fall während der Start- oder Landephase eines Flugzeugs. Die Tischeinrichtungen 8 befinden sich dann in ihrem eingeklappten Zustand und in einer Orientierung, in der sie kein Hindernis darstellen, sei es bei einem Aufprall oder bei einer Evakuierung der Kabine. In der gezeigten Konfiguration werden jeweils zwei Sitze 18 für die Passagiere und eine Tischeinrichtung 8 als eine Sitzgruppe 27 aufgefasst. Die Sitzgruppe 27 ist durch eine gestrichelte Umrandung angedeutet. Die tatsächliche Zuordnung von Sitzen und Tischen zu einer Sitzgruppe 27 kann in der Praxis abhängig von der tatsächlichen Beziehung der Passagiere zueinander gemacht werden. Die im folgenden angenommene Zuordnung ist also rein willkürlich. Die Sitze 18 sind durch einen seitlichen Zwischenraum 28 voneinander getrennt, wobei sich die Tischeinrichtung 8 vor den Sitzen befindet, so dass sie in etwa den gleichen Abstand zu jedem der beiden Sitze hat. In Blickrichtung, also frontal, sind sie durch einen Abstand 30 voneinander getrennt, der deutlich großzügiger ausgelegt ist als beim Stand der Technik nach Fig. 1 der Abstand zwischen zwei hintereinander angeordneten Sitzen 1. Die beiden genannten Abstände 28, 30 sind durch Doppelpfeile angedeutet, und sie entsprechen vorzugsweise jeweils der Breite bzw. Länge eines Sitzes.

Der Tischsockel 9 ist gegenüber den Sitzen 18 nach vorne versetzt, so dass der seitliche Abstand 28 der beiden Sitze 18 voneinander vorzugsweise im wesentlichen anderthalb Mal so groß ist wie der Abstand des Tischsockels von einem der Sitze. Damit lassen sich vier umgebende Sitze von einem Tisch versorgen, wobei der Abstand des Tisches zu allen Sitzen gleich ist.

In ausgeklapptem Zustand befindet sich dann jeweils eine Tischplatte 10 vor einem der Sitze 18. Dies ist in einer ersten Konstellation in Fig. 4B gezeigt. In Fig. 4B ist bei der Tischeinrichtung 8 links oben, d.h. der vordersten Tischeinrichtung 8 eine Seite des Tisches 8 ausgeklappt. Damit hat der Passagier auf dem zweiten Sitzplatz links die Möglichkeit, Gegenstände vor sich abzulegen oder zu speisen. Die anderen Tischplatten sind in dieser Konfiguration nach wie vor eingeklappt, so dass die Passagiere auf den restlichen dargestellten Sitzen maximale Beinfreiheit und Bewegungsfreiheit haben.

In der Konfiguration nach Fig. 4C sind die beiden Sitze vorne um 180° gedreht, so dass sie "nach hinten" blicken. Zwischen ihnen und den Sitzen dahinter ist die Tischeinrichtung 8 vollständig ausgeklappt, so dass die beiden vorderen, umgedrehten und die beiden hinteren Sitze sich jeweils vor einer Tischplatte 10 befinden. Damit können vier Personen mit einem erfindungsgemäßen Tischmodul 8 versorgt werden. Sie können darüber hinaus eine eigene Sitzgruppe bilden, die über die gesamte Reisedauer in der gezeigten Konstellation verbleibt. - Die beiden Sitze 18 in der Sitzgruppe 27 hinten sind jeweils um 90° zueinander gedreht, so dass sich ihre Insassen nun gegenübersitzen. Zwischen ihnen soll ebenfalls ein Tisch eingerichtet werden. Dazu wird das entsprechende Tischmodul 8 zunächst um seine vertikale Achse 29 um 90° aus seiner ursprünglichen, in Fig. 4A und 4B gezeigten Position in eine neue, querstehende Position gedreht, und anschließend wird eine der beiden Tischplatten 10 ausgeklappt. Die andere Tischplatte 10 wird nicht benötigt und bleibt daher eingeklappt. Damit ist auch die Sitzgruppe 27 mit zwei Personen umgewandelt worden in eine Speise-Konstellation.

Schließlich ist in Fig. 4D noch eine Konstellation gezeigt, die eine Alternative zu derjenigen in Fig. 4C darstellt. Hier sind die Sitze 18 der beiden ersten Sitzpaare vorne in der Kabine alle um 90° gedreht, so dass sich frühere Sitznachbarn nun jeweils gegenüber sitzen. Auf diese Art lässt sich auch eine "lange Tafel" erzeugen, und das Beispiel zeigt die große Flexibilität bei der Konstellation der erfindungsgemäßen Bestuhlung.

Die Drehung des Tisches bzw. des Sitzes erfolgt vorzugsweise elektrisch, pneumatisch oder hydraulisch. Um bei Ausfall des Systems aber trotzdem die Sitze und Tische verstellen zu können, ist eine (nicht dargestellte) Handkurbel vorgesehen.

Insbesondere die Tische in der Nähe der Seitenwände sind vorzugsweise asymmetrisch ausgelegt, d.h. haben nur auf einer Seite eine ausklappbare Tischplatte. In der Regel haben die anderen Tische dagegen auf ihren beiden Seiten eine Tischplatte.

### Bezugszeichen

- 1: Sitz
- 2: Kabinenboden
- 3: Sitzgestell
- 4: Sitzkissen
- 5: Rückenlehne
- 6: Armlehne
- 7: Klapptisch
- 8: Tischeinrichtung
- 9: Tischsockel, 9a Aufnahmefach für eingeklappte Tischplatte
- 10: ausklappbare Tischplatte
- 11: erstes Tischplattensegment
- 12: zweites Tischplattensegment
- 13: Zwischengelenk
- 14: erster Tischsockel
- 15: zweiter Tischsockel
- 16: erste ausklappbare Tischplatte
- 17: zweite ausklappbare Tischplatte
- 18: Drehsitz
- 19: Sitzverankerung
- 20: Befestigungsschiene
- 21: Sitzfläche
- 22: Sitzrückenlehne
- 23: Nackenstütze
- 24: Seitenlehne
- 25: drehbare Sitzplatte
- 26: zentrale vertikale Achse von Sitz
- 27: Sitzgruppe
- 28: seitlicher Zwischenraum zwischen benachbarten Sitzen
- 29: zentrale vertikale Achse von Tischsockel
- 30: frontaler Zwischenraum zwischen aufeinanderfolgenden Sitzen

## Patentansprüche

1. Bestuhlung einer Fahrzeugkabine und insbesondere einer Flugzeugkabine, die einen Kabinenboden (2) mit einer darunter liegenden Trägerstruktur umfasst, mit:
mehreren Sitzen (1; 18) für Passagiere, die jeweils durch einen Zwischenraum voneinander getrennt sind, und
jeweils einer Tischeinrichtung (7; 8) vor jedem der Sitze, die eine ausklappbare Tischplatte (10) umfasst,
wobei jeder Sitz umfasst:
- ein Sitzgestell (3; 19), das auf der Trägerstruktur (20) unter dem Kabinenboden (2) der Flugzeugkabine befestigt ist,
- ein Sitzkissen (4; 21), das auf dem Sitzgestell befestigt ist,
- eine Rückenlehne (5; 22), die an dem Sitzgestell befestigt ist,
wobei die mehreren Sitze alle einen vorgegebenen Abstand zueinander einhalten,
**dadurch gekennzeichnet, dass**
das Sitzgestell (3; 19) jedes Sitzes (18) um eine vertikale Achse (26) drehbar ist, so dass die Sitze zu variablen Sitzgruppen (27) zusammenfassbar sind, und
bei jeder Sitzgruppe (27) die Tischeinrichtung (8) einen Tischsockel (9; 14, 15) umfasst, der auf der Trägerstruktur (20) unter dem Kabinenboden (2) befestigt ist und so angeordnet ist, dass die Tischplatte (10) im wesentlichen einen gleichen Abstand von jedem der wenigstens zwei Sitze (18) einer Sitzgruppe (27) aufweist.

2. Bestuhlung nach Anspruch 1,
**dadurch gekennzeichnet, dass**
das Sitzgestell (3; 19) jedes Sitzes (18) um eine insbesondere zentrale vertikale Achse (26) drehbar ist, so dass der Sitz insbesondere um 90° oder 180° drehbar ist.

3. Bestuhlung nach Anspruch 1 oder 2,
**dadurch gekennzeichnet, dass**
der Sitz oder die wenigstens zwei Sitze (18) einer Sitzgruppe (27) seitlich und/oder nach vorne bzw. hinten verschiebbar ist bzw. sind.

4. Bestuhlung nach einem der vorangehenden Ansprüche,
**dadurch gekennzeichnet, dass**
der Tischsockel (9; 14, 15) um eine insbesondere zentrale vertikale Achse (29) drehbar ist.

5. Bestuhlung nach einem der vorangehenden Ansprüche,
**dadurch gekennzeichnet, dass**
der Tischsockel (9; 14, 15) seitlich und/oder nach vorne bzw. hinten verschiebbar ist.

6. Bestuhlung nach einem der vorangehenden Ansprüche,
**dadurch gekennzeichnet, dass**
der Tischsockel (9; 14, 15) gegenüber den wenigstens zwei Sitzen (18) einer Sitzgruppe (27) nach vorne versetzt ist, so dass der seitliche Abstand (28) der beiden Sitze (18) voneinander im wesentlichen anderthalb Mal so groß ist wie der Abstand des Tischsockels von einem der Sitze.

7. Bestuhlung nach einem der vorangehenden Ansprüche,
**dadurch gekennzeichnet, dass**
die Sitzgruppe (27) vier Sitze (18) umfasst, die durch einen ersten Zwischenraum (28) seitlich und einen zweiten Zwischenraum (30) in Blickrichtung voneinander getrennt sind, und
der Tischsockel (9; 14, 15) symmetrisch zwischen den vier Sitzen (18) angeordnet ist, so dass sein Abstand zu jedem der Sitze im wesentlichen gleich groß ist.

8. Bestuhlung nach Anspruch 7,
**dadurch gekennzeichnet, dass**
der Tischsockel (9; 14, 15) auf zwei gegenüberliegenden Seiten jeweils eine Tischplatte (16, 17) umfasst.

9. Bestuhlung nach einem der vorangehenden Ansprüche,
**dadurch gekennzeichnet, dass**
die Tischplatte (10) mehrere Plattensegmente (11, 12) umfasst, die jeweils gelenkig (13) miteinander verbunden sind.

10. Bestuhlung nach einem der vorangehenden Ansprüche,
**dadurch gekennzeichnet, dass**
der Abstand (28, 30) zwischen zwei Sitzen im wesentlichen einer Sitzbreite entspricht.

## Claims

1. Seating for a vehicle cabin and more particularly an aircraft cabin which consists of a cabin floor (2) with support structure underneath, having:
several seats (1; 18) for passengers which are each separated from one another by an interspace, and
one table unit (7; 8) in front of each of the seats and comprising an unfolding table top (10),
wherein each seat consists of:
- a seat frame (3; 19) which is fixed on the support structure (20) underneath the cabin floor (2) of the aircraft cabin,
- a seat cushion (4; 21) which is fixed on the seat frame,
- a backrest (5; 22) which is fixed on the seat frame,
wherein the several seats all maintain a predetermined distance from one another,
**characterised in that**
the seat frame (3, 19) of each seat (18) is capable of rotating around a vertical axis (26) so that the seats can be combined into variable seating groups (27), and
in the case of each seating group (27) the table unit (8) comprises a table pedestal socket (9; 14; 15) which is fixed on the support structure (20) underneath the cabin floor (2) and is arranged so that the table top (10) has substantially the same distance from each of the at least two seats (18) of one seating group (27).

2. Seating according to claim 1 **characterised in that** the seat frame (3; 19) of each seat (18) is capable of rotating about an in particular central vertical axis (26) so that the seat is able to rotate in particular around 90° or 180°.

3. Seating according to claim 1 or 2 **characterised in that** the seat or the at least two seats (18) of one seating group (27) is or are displaceable sideways and/or forwards and backwards.

4. Seating according to one of the preceding claims **characterised in that** the table pedestal socket (9; 14, 15) is capable of rotating around a more particularly central vertical axis (29).

5. Seating according to one of the preceding claims **characterised in that** the table pedestal socket (9; 14, 15) is displaceable sideways and/or forwards and backwards.

6. Seating according to one of the preceding claims **characterised in that** the table pedestal socket (9; 14, 15) is off-set forwards relative to the at least two seats (18) of one seating group (27) so that the lateral distance (28) of the two seats (18) from one another is substantially one and half times as large as the distance of the table pedestal socket from one of the seats.

7. Seating according to one of the preceding claims **characterised in that** the seating group (27) comprises four seats (18) which are separated from one another sideways by a first interspace (28) and in the viewing direction by a second interspace (30), and the table pedestal socket (9; 14, 15) is arranged symmetrically between the four seats (18) so that its distance from each of the seats is substantially the same size.

8. Seating according to claim 7 **characterised in that** the table pedestal socket (9; 14, 15) has a table top (16, 17) on each of its two opposite sides.

9. Seating according to one of the preceding claims **characterised in that** the table top (10) has several plate segments (11, 12) which are each connected to one another with articulated movement (13).

10. Seating according to one of the preceding claims **characterised in that** the distance (28, 30) between two seats corresponds substantially to one seat width.

## Revendications

1. Système de siège d'une cabine de véhicule et particulièrement d'une cabine d'avion comprenant un sol de cabine (2) avec une structure porteuse reposant dessus, comprenant
plusieurs sièges (1 ; 18) pour des passagers, qui sont respectivement séparés les uns des autres par une espace intermédiaire, et
respectivement un dispositif de table (7 ; 8) devant chaque siège qui comprend une tablette rabattable (10), sachant que chaque siège comprend :
- un châssis de siège (3 ; 19) qui est fixé sur la structure porteuse (20) sous le sol de cabine (2) de la cabine de l'avion,
- un coussin de siège (4 ; 21) qui est fixé sur le châssis de siège,
- un dossier (5 ; 22) qui est fixé sur le châssis de siège,
sachant que la pluralité de sièges respecte un écart prédéfini entre eux, **caractérisé en ce que** le châssis de siège (3 ; 19) de chaque siège (18) peut tourner sur un axe vertical (26) de façon à ce que les sièges puissent être regroupés en des groupes de sièges variables (27), et
dans chaque groupe de siège (27), le dispositif de table (8) comprend un socle de table (9 ; 14, 15) qui est fixé sur la structure porteuse (20) sous le sol de cabine (2) et ainsi aménagé que la tablette (10) présente essentiellement un écart égal depuis chacun des au moins deux sièges (18) d'un groupe de sièges (27).

2. Système de siège selon la revendication 1, **caractérisé en ce que** le châssis de siège (3 ; 19) de chaque siège (18) peut tourner sur un axe vertical particulièrement central (26) de façon à ce que le siège puisse tourner en particulier de 90° ou 180°.

3. Système de siège selon la revendication 1 ou 2, **caractérisé en ce que** le siège ou les au moins deux sièges (18) d'un groupe de sièges (27) est/sont mobile(s) latéralement et/ou vers l'avant respectivement vers l'arrière.

4. Système de siège selon l'une des revendications précédentes, **caractérisé en ce que** le socle de table (9 ; 14, 15) peut tourner sur un axe vertical particulièrement central (29).

5. Système de siège selon l'une des revendications précédentes, **caractérisé en ce que** le socle de table (9 ; 14, 15) est mobile latéralement et/ou vers l'avant respectivement vers l'arrière.

6. Système de siège selon l'une des revendications précédentes, **caractérisé en ce que** le socle de table (9 ; 14, 15) est décalé vers l'avant par rapport aux au moins deux sièges (18) d'un groupe de sièges (27), de façon à ce que l'écart latéral (28) des deux sièges (18) l'un de l'autre est essentiellement une fois et demie aussi grand que l'écart du socle de base depuis l'un des sièges.

7. Système de siège selon l'une des revendications précédentes, **caractérisé en ce que** le groupe de sièges (27) comprend quatre sièges (18) qui sont séparés l'un de l'autre par un premier espace intermédiaire (28) latéralement et un deuxième espace intermédiaire (30) dans le sens du regard, et le socle de table (9 ; 14, 15) est disposé de manière symétrique entre les quatre sièges (18), de façon à ce que son écart depuis chacun des sièges soit essentiellement le même.

8. Système de siège selon la revendication 7, **caractérisé en ce que** le socle de table (9 ; 14, 15) comprend une tablette respective (16, 17) sur deux côtés opposés.

9. Système de siège selon l'une des revendications précédentes, **caractérisé en ce que** la tablette (10) comprend plusieurs segments de tablette (11, 12) qui sont reliés respectivement de manière articulée (13) entre eux.

10. Système de siège selon l'une des revendications précédentes, **caractérisé en ce que** l'écart (28, 30) entre deux sièges correspond essentiellement à une largeur de siège.
